# EUROPEAN PATENT SPECIFICATION

(11) **EP 1 368 580 B1**
(45) Date of publication and mention of the grant of the patent: **13.05.2009**
(21) Application number: 01973823.6
(22) Date of filing: 27.09.2001
(51) Int. Cl.: B60G 3/20, B60G 11/30, B60G 17/04, F16F 9/06, F16F 9/36

(54) **SUSPENSION SYSTEM**
AUFHÄNGUNGSSYSTEM
SYSTEME DE SUSPENSION

(30) Priority: 28.09.2000 AU PR044200; 29.06.2001 AU PR603501
(43) Date of publication of application: 10.12.2003
(73) Proprietor: Robertson, Graeme K., Shepparton East, Victoria 3631 (AU)
(72) Inventor: Robertson, Graeme K., Shepparton East, Victoria 3631 (AU)
(74) Representative: Charlton, Peter John
(86) International application number: PCT/AU2001/001210
(87) International publication number: WO 2002/027211

(56) References cited:
- EP-A- 0 607 545
- DE-B- 1 157 089
- GB-A- 1 500 516
- GB-A- 2 239 073
- US-A- 3 077 345
- PATENT ABSTRACTS OF JAPAN vol. 1996, no. 11, 29 November 1996 (1996-11-29) & JP 08 177935 A (MITSUBISHI MOTORS CORP), 12 July 1996 (1996-07-12)

## Description

The present invention relates generally to suspension units and/or suspension systems, particularly adapted for but not exclusively for use with, vehicles or the like, including suspension units and/or suspension systems for vehicles which travel along sealed roads and suspension systems for vehicles which travel off-road such as for example, off-road racing vehicles including motorcycles, military vehicles, vehicles used in the mining industries particularly to transport ore materials and the like. The suspension system is also adapted for use in industrial applications, such as for example, industrial switch gear applications, suspension systems for seats, particularly vehicle seats, truck cab suspensions or the like.

More particularly, the present invention relates to vehicle suspension systems of the combined gas and liquid type suspension systems having a moveable piston which systems do not have any metal springs, such as leaf springs, coil springs or the like as part of the suspension system.

Even more particularly, the present invention relates to an oleo-pneumatic suspension system having a reservoir or accumulator for storing or holding fluid, such as hydraulic oil, silicone oil or similar, under gas pressure, in fluid communication with a motion damping device having a valve arrangement or similar so that the fluid is continually being transferred between the accumulator and the motion damping device in response to movement of the road wheel of the vehicle with which the system is associated in use of the vehicle. In place of metal springs, the suspension uses gas under pressure to provide the system with resilience and to effect controlled rebound of the suspension components and the control movement of the road wheel and/or to adjust the height of the suspension, particularly the ride height of the vehicle. The present invention also finds application in a compact suspension system having a single unit which is a combined suspension system for adjusting the ride height of the vehicle and a motion damping system for use in a wide variety of vehicles extending from motorcycles through to more or less conventional vehicles for normal road use and four wheel drive vehicles to specialist vehicles such as military vehicles and industrial vehicles.

Although the present invention will be described with particular reference to different forms of the suspension system it is to be noted that the present invention is not limited in scope to the described embodiments but rather the scope of the present invention is more extensive so as to include other components and arrangements of the suspension system and other uses than the specific embodiments described, including applications other than adjusting the spatial arrangement of two moveable members and controlling their movement relative to each other.

One problem associated with vehicles crossing rough terrain is the amount of travel required of the suspension system. Unless virtually unlimited travel of the suspension system is provided which is impracticable, when the suspension system reaches its limit of travel there will be contact of one component against another component which produces a jolting ride and ultimately fatigue of the components contacting each other as well as loss of traction and control of the vehicle. In conventional suspension systems having metal springs, even variable rate metal springs, such as coil springs or auxiliary springs, owing to the compression/rebound characteristics of the metal springs, the suspension often reaches its limit of travel so that components of the suspension system contact the body of the vehicle, such as for example, the suspension arms contacting the bump stop provided on the vehicle or the vehicle "bottoms out". When this occurs, not only are the occupants of the vehicle jolted or the freight being carried by the vehicle subject to shock, but also the contact of the various individual suspension components against each other often breaks one or more of the suspension components or the body or chassis of the vehicle. Broken suspension components often occur in diverse areas of activities such as in off-road racing where vehicles must travel fast over rough terrain, in the mining industry where extremely heavy loads must be transported over rough terrain in harsh and corrosive environments, and in military applications where men and equipment must be transported in arduous conditions, even including parachuting vehicles, such as four wheel drives, jeeps and the like from low flying aeroplanes onto the ground where the vehicles land with a jolt, often disabling the vehicle and equipment loaded with the vehicle due to the limited compliance of the suspension systems of such vehicles.

In many applications it is desirable to have a more supple suspension even though the vehicle is used in a harsh environment. In these applications not only must the suspension components be durable and reliable but the ride must also be substantially smooth or at least the suspension must not reach the limits of its travel or "bottom out". Therefore, it is one aim of the present invention to provide a suspension system which can be used in harsh environments such as rough terrain and which provides a supple ride, particularly without the use of metal springs or other components.

Another problem of existing conventional suspension systems having metal springs or similar components relates to the ride height of the vehicle and the adjustability of the ride height. In many instances, the ride vehicle which is not adjustable is set by the various components of the suspension, such as the coil spring or the like. In order to change the ride height it is necessary to physically interchange components which is expensive, time consuming and wasteful of materials and components. Often the ride height of a vehicle, such as an off road racing vehicle, will need to be adjusted quickly one or more times during the same event. Conventional suspensions do not usually allow such adjustments to be made quickly. Therefore, there is a need for a suspension system that allows the ride height of a vehicle to be adjusted, particularly adjusted quickly and effectively.

In other applications, such as for example, in normal domestic vehicles of the type which are privately owned or in motor cycles, there is a need for suspensions which occupy a smaller space within the confines of the car, bike or similar and yet work at least as effectively as more conventional suspensions in ordinary everyday driving. Thus, there is a need for a more compact suspension system which occupies less room on or within a vehicle and also provides acceptable ride and comfort which suspension system is adapted for use in normal road going cars.

Us-A-3077345 discloses a suspension system generally in accordance with the preamble of claim 1. Other suspension systems are known from GB-A-2239073, EP-A-0607545, GB-A-1500516 and DE1157089B.
According to the present invention there is provided a suspension system including an accumulator for holding and maintaining a fluid under pressure, said accumulator having a floating piston that sealingly separates a first cavity for storing a pressurised gas and a second cavity for storing a fluid under pressure; and a motion damping means that is fluid-filled in operation, in fluid flow communication with the second cavity of the accumulator, said motion damping means having a pair of relatively moveable parts and valve means permitting flow of said fluid between said parts; wherein said parts are capable of relative retracting and extending movement during which fluid is forced through said valve means at respective predetermined controlled rates so as to dampen the movement; wherein said movement is such that when said parts relatively extend, fluid is caused to flow from said second cavity of the accumulator to the damping means, whereby gas pressure in said first cavity moves the floating piston in the accumulator to reduce the gas pressure in the first cavity, and when said parts relatively retract, fluid is caused to flow from the damping means to said second cavity of the accumulator, whereby to move the floating piston to increase the gas pressure of the gas in the first cavity; and wherein said relatively moveable parts contain respective chambers for said fluid and comprise a first part and a second part in which the first part is receivable, the chamber of the first part being in said fluid flow communication with said second cavity, and in that said valve means separates said chambers but permits said flow of said fluid between the chambers at said respective predetermined controlled rates; characterised in that the suspension system further includes an active suspension component in which a sensor controls movement of a piston in a secondary container containing fluid, said secondary container in fluid communication with a primary container having a piston for containing gas in the primary container under pressure, said primary container in fluid communication with the first cavity of the accumulator of the suspension system, wherein movement of the piston of the secondary container in response to the sensor causes movement of the suspension system to alter the ride height of a vehicle in which the system is installed, and wherein in the event of malfunction of the sensor or the secondary container the piston of the first container moves under gas pressure in the primary container to seal the primary container thereby stopping fluid communication between the primary and secondary containers and thus acting as a fail safe or back-up system by maintaining the ride height of the vehicle.

Typically, the suspension unit is a compact unit, preferably adapted for use with motorcycles, particularly off-road or all terrain motorcycles, racing motorcycles and with conventional road going cars or the like.

Typically, the first part is a cavity chamber or similar, or is provided with a cavity, etc. More typically, the first part is an accumulator or reservoir for storing the pressurised gas and for periodically or partially containing fluid depending upon the position of the moveable piston.

Typically, the moveable piston is axially moveable within the first part. Typically, the first and second parts are sealingly connected to each other and are axially or telescopically moveable with respect to each other. Accordingly, a part of the first or second part is moveable with respect to the other part.

Typically, the valve arrangement is fixedly located, preferably connected to the second part containing the fluid. More typically, the valve is a two-way valve allowing fluid to flow through the valve in two directions, preferably at two different rates.

Typically, the suspension unit is a combined accumulator and a damping unit within a single body, housing compartment or unit. More typically, the suspension unit is a separate accumulator and a damping unit in different bodies or housings but in fluid communication with each other arranged such at a part of the damping unit moves with respect to the accumulator. More typically, the separate accumulator and damping means are each provided with a piston, preferably a floating piston. Even more typically, the damping unit is provided with a valve arrangement.

Typically, the suspension unit or suspension system having the unit is self levelling or self adjusting with respect to ride height. More typically, the suspension is adjustable to alter the ride height.

Typically, each suspension system of the vehicle has an accumulator and a damping means. Optionally, the suspension system has one or more separate shock absorbers in addition to the accumulator and damping means.

Typically, the first cavity of the accumulator or reservoir is a gas filled chamber in which gas is stored under pressure. More typically, the gas is air, nitrogen, oxygen, inert gas or the like including combinations and mixtures thereof. More typically, the first cavity of the accumulator is provided with a gas valve allowing gas to be admitted to or withdrawn from the accumulator. More typically, the accumulator can be pressurised to any suitable pressure as predetermined by the particular application. The pressure can vary from a very low pressure such as less than 20 psi to a very high pressure. Typically, the predetermined pressure can range from less than 20 psi to being in excess of 2000 psi. However, lower pressures can be used in applications such as push bikes, motorcycles and other light weight vehicles whereas pressures of about 200 psi can be used for heavy duty vehicles and higher pressures for specialised vehicles. More typically, the gas pressure in the accumulator is adjustable to any value in accordance with requirements of the vehicle to which the suspension system of the present invention is fitted depending upon the size of the vehicle, the type of vehicle, the intended use of the vehicle, the ride height of the vehicle, and the speed of which the vehicle is driven and other similar variables. Typically, the ride height can be adjusted by adjusting the gas pressure.

Typically, the piston is located at the interface of the first cavity and second cavity and separates the gas in the first cavity from the fluid in the second cavity. More typically, the sizes of the first and second cavities change in accordance with the position of the piston and movement of the piston. Typically, the piston is a floating piston or a freely moving piston, particularly freely moving with respect to the side walls of the accumulator.

Typically, the accumulator is a hollow cylinder prior to filling with gas and/or fluid and the piston is double sided in which the piston moves axially within the bore of the cylinder in response to changed conditions within the accumulator.

Typically, the combined volume of the first and second cavities of the accumulator remain constant irrespective of the position or movement of the piston.

More typically, the volume of the accumulator changes during operation of the suspension system, particularly with changes to the position of the damping means with respect to the accumulator.

Typically, the motion damping means is used to control the ride height of the vehicle. Typically, the suspension unit or system is provided with one or more additional external shock absorbers or is like a shock absorber or performs the same as or a similar function to a shock absorber, but without having the piston and shaft arrangement of a conventional shock absorber. More typically the damping means is a variable rate ride height component in which the flow of fluid in one direction is controlled at a first rate and the flow of fluid in a second direction is controlled at a second rate. The first rate can be the same as or different to the second rate. One rate is associated with compression of the damping means whereas the other rate is associated with extension of the damping means.

More typically, the damping means or combined unit incorporating the damping means is provided with valving such as for example, a variable rate valve to control the flow of fluid through the component or unit at one or more predetermined controlled rates. More typically, the valve is a one-way or a two-way valve. Even more typically, the two way valve has two different flow characteristics depending upon the direction of flow of the fluid within the combined unit or damping unit. More typically, the valve arrangement is fixed within the body of the damping unit or component.

Typically, the volume of the first cavity or chamber of the accumulator corresponds to the volume of the damping unit or suspension unit. More typically, the flow rate of fluid into and out of the first cavity chamber is substantially the same as the flow rate of fluid into and out of the motion damping device. Even more typically, the size of the accumulator is substantially the same as the size of the motion damping device. Even more typically, the diameter of the accumulator, preferably the inside diameter of the first cavity, is the same as the diameter of the motion damping device, preferably the inside diameter of the motion damping device. Even more typically, the difference in volume of the motion damping device between the retracted and extended positions is substantially the same as the difference in volume of the second cavity of the accumulator.

Typically, the amount of movement of the piston in the accumulator corresponds to the amount of movement of the motion damping device or the amount of movement of the piston of the motion damping device. More typically, the extent of travel of the piston is in accordance with the extent of retraction/extension of the motion damping device.

Typically, as the motion damping device extends the piston moves toward the fluid outlet to the same extent of travel as the amount of extension and as the motion damping device retracts the piston moves away from the fluid outlet to the same extent of travel.

Typically, the combined volume of motion damping device and first cavity is from about 500ml to about 3.5 litres. However, the capacity of each individual component and of the system overall can take any value depending upon application, size, type and arrangement.

Typically, the size of the valves of the motion damping device are selected in accordance with the size of the accumulator and the motion damping device to allow free flow of fluid between the accumulator and the motion damping device.

Typically, the damping unit is provided with by-pass passages, conduits, tubes, tubing, or similar interconnecting the sides of the unit to provide variable valving for different rates of movement of the piston in the damping device depending upon the position of the piston. Typically, the by-pass passages are located externally of the damping unit. More typically, adjustment of the variable rates is from outside the damping unit by adjusting the flow of fluid through the by-pass passages.

Typically, the components making up the suspension unit or suspension system are low friction, such as by being coated with a teflon coating or similar.

Typically, the suspension unit or suspension system is an active suspension system, preferably a computer controlled suspension system. More typically, the suspension unit or suspension system includes an auxiliar reservoir, canister, container or the like in fluid communication with the main suspension unit. The canister contains gas held under a predetermined pressure by a piston. The canister is also in fluid communication with a further container of oil under pressure having a piston so that the oil acts on the gas piston to pressurise or maintain the gas under pressure. Sensors control operation of the piston in the oil canister to maintain pressure in the gas canister. Even more typically, the arrangement is a back-up or fail safe arrangement for the main suspension unit.

The present invention will now be described by way of example with reference to the accompanying drawings in which:
Figure 1 is a side schematic view of one form of a vehicle having the suspension system including the suspension units of the present invention located at the front and rear of the vehicle;
Figure 2 is a top plan view taken along the line 2 to 2 of Figure 1;
Figure 3 is a front elevation view of the suspension system taken along the line 3 to 3 of Figure 2 in a first condition which is the normal use position;
Figure 4 is a front elevation view of the suspension system of Figure 2 in a second condition which is a relatively raised position;
Figure 5 is a front elevation view of the suspension of Figure 2 in a third condition which is a relatively lower position;
Figure 6 is a cross-sectional view of one form of the fluid filled damping unit or suspension unit of the present invention;
Figure 7 is a cross-sectional view of one form of the accumulator used in the suspension system of the present invention;
Figure 8 is a schematic view of one form of the fluid connection between the accumulator and the damping unit in one condition corresponding to the extended position of the shock absorber when the road wheel is in the position shown in Figure 4; and
Figure 9 is a schematic view similar to that of Figure 8 showing the suspension system in another condition which corresponds to the retracted position of the damping unit when the road wheel is in the position shown in Figure 5.
Figure 10 is a cross-sectional view of another form of the suspension unit of the present invention being a combined damping unit and accumulator in a single unit.
Figure 11 is a partial cross-section view of the suspension unit shown in Figure 10 showing the connection between the two parts in more detail.

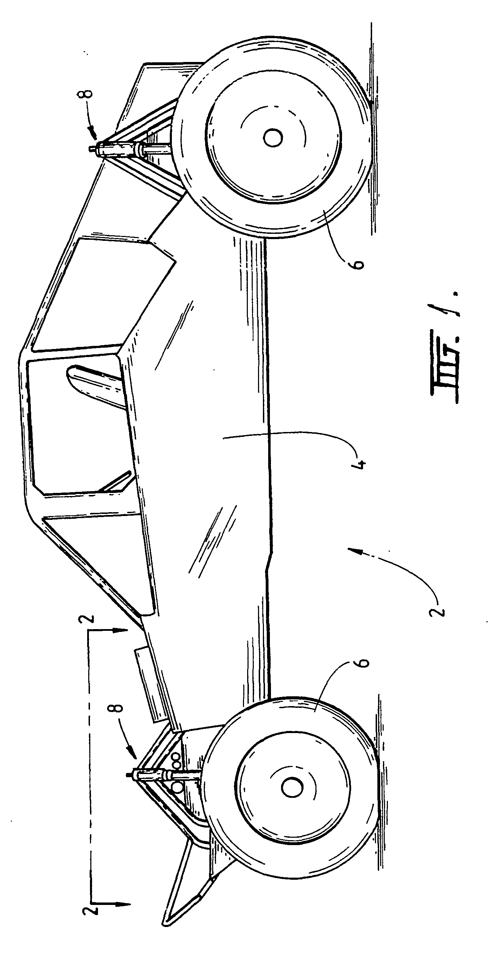

In Figure 1 there is shown one form of a motor vehicle having the suspension system incorporating one form of the suspension unit of the present invention. This form of the motor vehicle is an off-road vehicle, typically an off-road racing vehicle generally denoted as 2. Vehicle 2 is provided with a body 4, a set of road wheels 6 and a suspension system 8 located at or towards the front of the vehicle and another suspension system 8 located at the rear of the vehicle. It is to be noted that the suspension system 8 at the front of the vehicle can be the same, substantially the same or different to the suspension system 8 located at the rear of the vehicle. For the sake of clarity and ease of description the suspension at the front of the vehicle will be described in detail. The rear suspension is in essence the same, although detailed changes can be effected depending upon circumstances.

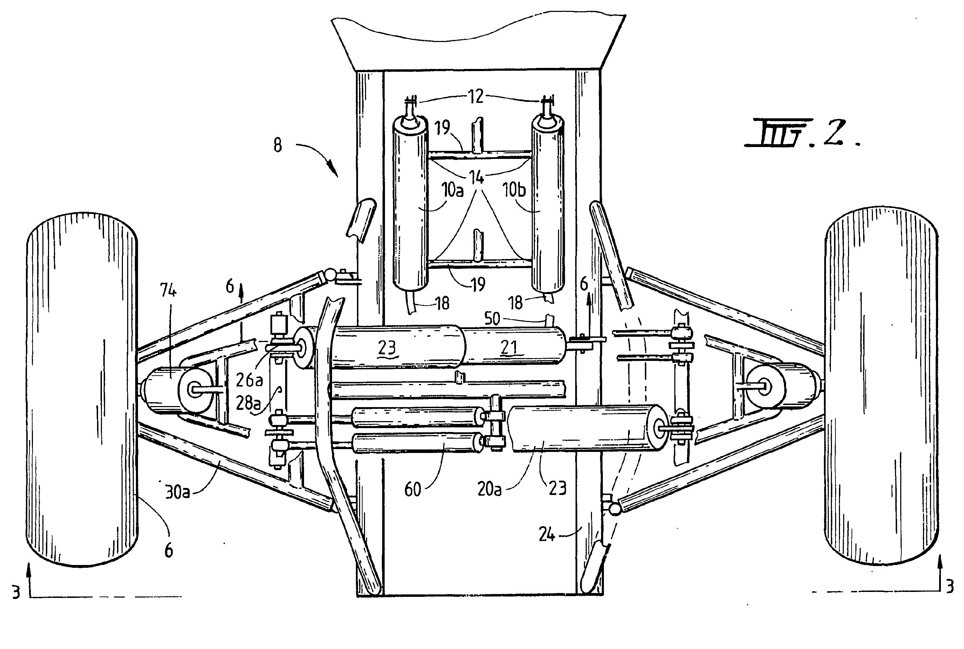

In Figures 2 to 5, there are shown different views of the suspension system 8 in different operating positions. Starting with Figure 2 there is shown a general view of the layout of the suspension components forming the suspension system when the vehicle is in the normal at rest position. This form of the suspension system includes the suspension unit separated into two different components in fluid communication with each other. Suspension system 8 includes two accumulators 10a, 10b located in substantially parallel side by side relationship to each other and provided with gas valves 12 at their respective tops for admitting gas, typically air, nitrogen, oxygen or the like including combinations of different gases under pressure to the accumulators 10a, 10b, so as to pressure the accumulators and to maintain any fluid in the accumulators under pressure. The accumulators are part of one form of the suspension units of the present invention.

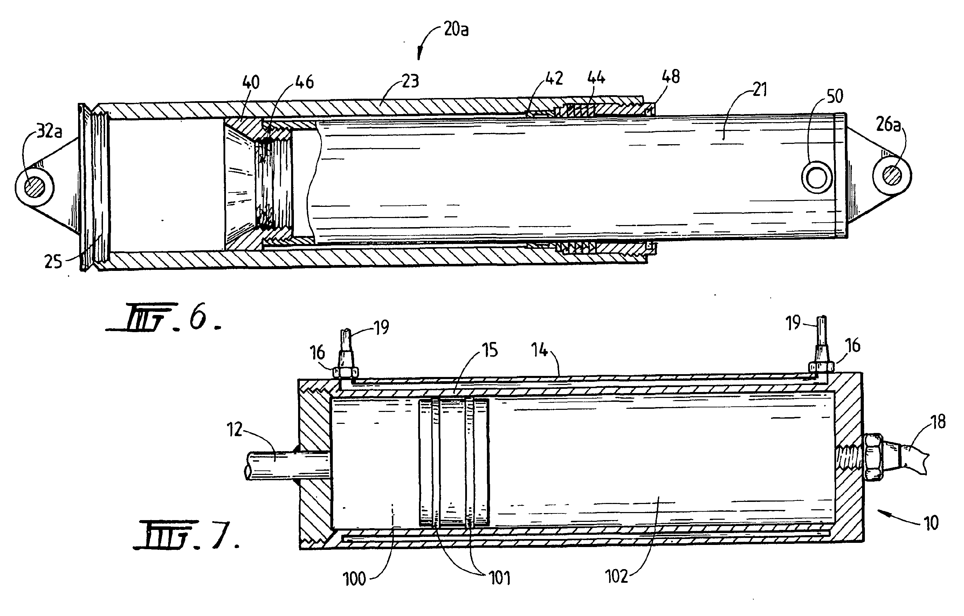

With particular reference to Figure 7, one form of a single accumulator 10 will be described. Accumulator 10 in one form is cylindrical and is provided with a cylindrical water jacket 14 surrounding the internal cylindrical wall 15 of the accumulator. Two inlets/outlets 16 are provided to allow coolant, such as water or a water ethylene glycol mixture to circulate around within the jacket 14 of each accumulator 10. A radiator (not shown) is provided to cool the coolant in operation of the vehicle. Conduits 19 convey coolant to and from the radiator. It is to be noted that each accumulator 10 can have its own radiator or there may be a single radiator for cooling both accumulators 10a and 10b. In other embodiments the accumulator does not have a cooling jacket but is either provided with cooling fins or cooling is through the walls of the accumulator.

A double faced piston 17 is provided within the bore formed by the cylindrical inner wall 15 of the accumulator to divide the accumulator into two cavities, 100 and 102. Gas under pressure is stored in cavity 100 whereas fluid is stored in cavity 102 under pressure exerted by the gas pressure in cavity 100 via piston 17 in use of the suspension system. Two sealing rings 101 are provided in the side wall of piston 17 to assist in separating the gas in cavity 100 from the fluid in cavity 102. As piston 17 moves axially towards valve 12 there is an increase in gas pressure of the gas located in cavity 100 and when piston 17 moves axially towards conduit 18 fluid is forced out of accumulator 10 thus reducing the gas pressure in cavity 100. It is to be noted that accumulator 10a is provided for the suspension system on the right hand side of vehicle 2 whilst accumulator 10b is provided for the left hand front suspension only. Further, it is to be noted that the fluid connection and communication for the left hand side suspension is isolated from that of the right hand side so that there is no transfer of fluid between the two separate and isolated systems corresponding to either side of the vehicle.

The suspension system on the right hand side of vehicle 2 will now be described, that on the left hand side being substantially identical. A flexible conduit 18 extends between one end of accumulator 10a which is the end opposite gas valve 12 to one end of damping unit 20a to allow fluid under pressure to flow between the accumulator 10a and damping unit 20a depending upon the position of road wheel 6 with respect to vehicle 2. The damping unit 20a is the other part of the suspension unit separated from but in fluid communication with the accumulator.

Whilst the damping unit 20a is similar in construction and operation to a shock absorber, it is also very different to a conventional shock absorber since the damping unit does not have the moveable valve and shaft arrangement of the conventional shock absorber and the conventional shock absorber cannot be used to maintain the ride height of the vehicle.

Damping unit 20a includes two telescopic members with an inner tube 21 located within the outer tube 23. A flow regulator in the form of a valve is located intermediate the two telescopic members 21, 23 and regulates the flow of fluid through the damping unit in accordance with movement of road wheel 6 in use of vehicle 2. The distal end of the inner member 21 of damping unit 20a, is fixedly connected to chassis member 24 by a pivoting fitting 26a. The distal end of the outer member 23 of damping unit 20a is pivotally connected to a strut arrangement 28a fixedly connected to upper wishbone 30a by pivoting fitting 32a. One end of upper wishbone 30a is pivotally connected to chassis member 24 by pivoting fitting 27a while the other end is connected to the hub 34 of road wheel 6. As road wheel 6 moves vertically upwards and downwards in operation of vehicle 2 the end of wishbone 30a connected to hub 34 moves vertically upwards and downwards accordingly. In turn, the outer tube 23 of damping unit 20a connected to strut arrangement 28a moves axially along the lengthwise direction of the shock absorber to extend or retract the damping unit. It is to be noted that damping unit 20a may be provided with external shock absorbers 60 either in addition to or as a replacement for damping unit 20a and/or the fluid control valve located internally within damping unit 20a.

The construction of the damping unit 20a will now be described in more detail with particular reference to Figure 6. Outer telescopic tube 23 is formed as a tube having the distal end closed and the proximal end open or if both ends are open the distal end is sealed by a sealing cap 25. In one embodiment the inner wall of outer tube 23 is threaded to receive the correspondingly threaded cap 25 and 'O'-ring of resilient material such as rubber (not shown). The proximal end of outer tube 23 is open to receive the proximal end of the inner tube 21. The distal end of inner tube 21 is provided with a bush 40, typically made from brass within this tube is located a valve for controlling the rate of fluid flow through damping unit 20a, such as for example, a flooder valve having a plurality of apertures (not shown) for controlling the rate of flow of fluid in both directions from one end of the damping unit to the other end of the unit. In one embodiment of the flooder valve there are two sets of apertures; one set controlling the flow of fluid as the damping unit extends to increase its volume and another set for controlling the flow of fluid as the unit retracts to decrease its volume. The two sets of apertures in one embodiment can be of the same size so that the rate of extension of the damping unit is about the same as the rate of retraction or in other embodiments the two sets of apertures may be of different sizes so that the rate of extension is different to the rate of retraction. The rates of flow in either direction are adjustable, such as for example, by the use of shims to partially open and close the apertures of the valve.

In a preferred embodiment the rate of extension of the damping unit is greater than the rate of retraction to allow the road wheels to more quickly follow the contour of the road through a dip and to compress more slowly so as to retard the speed with which the suspension rebounds to its at rest position. The respective proximal ends of the inner tube 21 and outer tube 23 are sealingly connected to each other by a suitable sealing means. In one embodiment the sealing means includes an inner bearing 42 and a plastic or nylon sealing array 44 connected to the distal end of the outer tube 23 and a teflon ring 46 connected to the distal end of the inner tube 21 arranged so that when the damping unit is fully retracted the teflon ring 46 is located within the bearing 42. A scrapper ring 48 is also provided intermediate the inner and outer tubes and the whole assembly is held together by a nut or other suitable fastener preventing the inner tube 21 and outer tube 23 from disengaging during use. Inlet 50 is provided in the wall of inner tube 21 for connection to conduit 18 to permit transfer of fluid between accumulator 10 and damping unit 20.

A shock absorbing assembly is provided to further limit the amount of travel of wheel 6 in the event that it is required or the suspension system just described is insufficient to limit the wheel movement. This additional assembly includes a strut arrangement comprising struts 70, 72 forming a generally triangular framework fixedly connected to chassis member 24. A shock absorber 74 having a downwardly depending ram 76 is fixedly located at the distal end of struts 70, 72. Ram 76 is forced to retract into the body of shock absorber 74 by contact with strut 30a as wheel 6 rises substantially vertically during use of vehicle 2. It is to be noted that this assembly is only activated and/or needed in exceptional circumstances when the main suspension system either reaches the limit of its capability or experiences a fluid leak or similar circumstance.

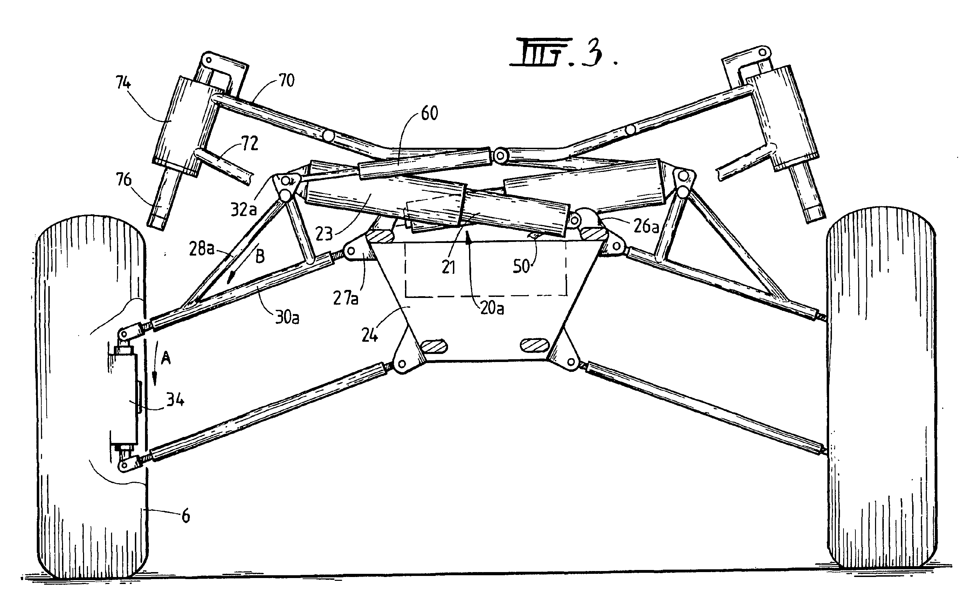

Operation of the suspension system of the present invention will now be described. In operation as vehicle 2 is being driven along a smooth stretch of road or similar, the suspension adopts a normal at rest position as shown in Figure 3 in which inner member 21 and outer member 23 of the damping unit 20 are in their normal at rest positions such that the join between the two tubes is located about mid-way of the length of the unit.

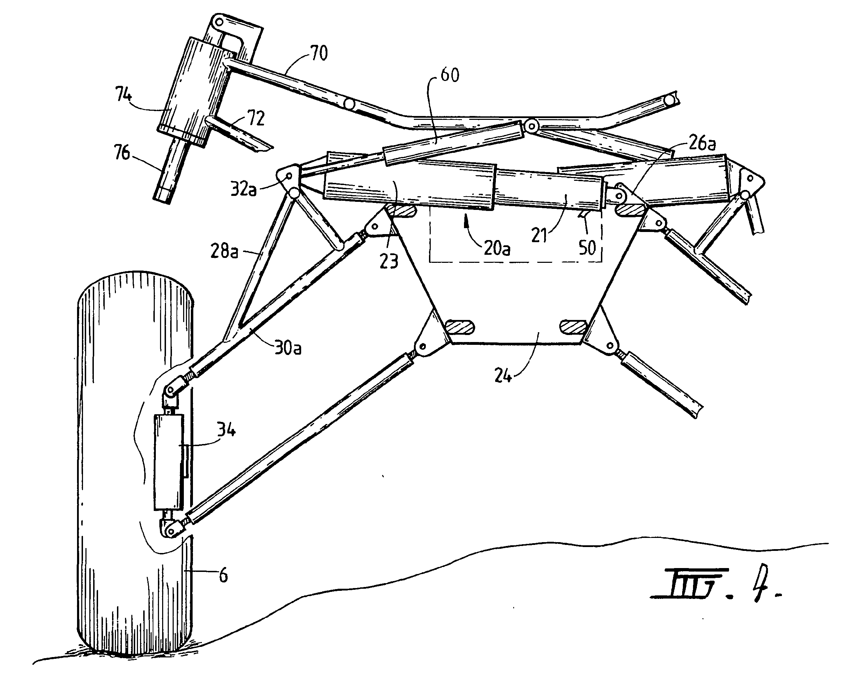

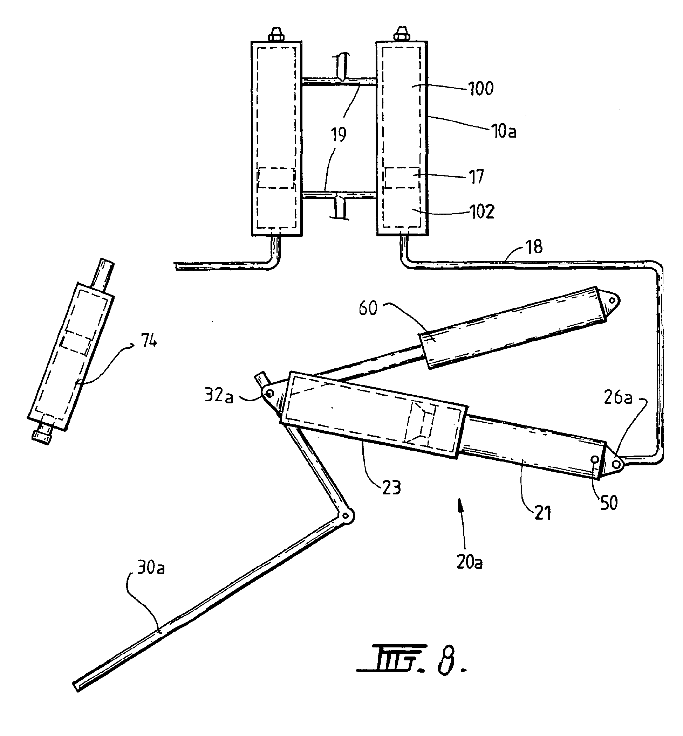

When road wheel 6 strikes a bump such as a trough, hollow, dip or the like, road wheel 6 is located relatively more lowered than chassis member 24 as shown in Figure 4. In this position the end of upper wishbone 30a connected to hub 34 is deflected downwards as indicated by arrow A of Figure 3 to adopt the position shown in Figure 4 which in turn rotates strut arrangement 28a in a downwards direction as indicated by arrow B of Figure 3 to adopt the position as shown in Figure 4 which has the effect of extending the outer tube 23 with respect to inner tube 21 which is retained in position by pivoting fitting 26a connecting it to chassis member 24 so as to extend the length of damping unit 20a. As the outer tube 23 extends to increase the volume of damping unit 20a the pressure within damping unit 20a is reduced allowing more fluid to flow into damping unit 20a from cavity 102 of accumulator 10a via conduit 18 and inlet 50 by the movement of piston 17 axially within the accumulator 10 due to the fluid in accumulator 20a being under pressure from the gas in the cavity 100 which has the effect of decreasing the gas pressure in cavity 100 of accumulator 10a. The transfer of fluid associated with the lowering of road wheel 6 is shown diagrammatically in Figure 8 showing piston 17 located more towards conduit 18 thereby reducing the volume of cavity 102 and increasing the volume of cavity 100.

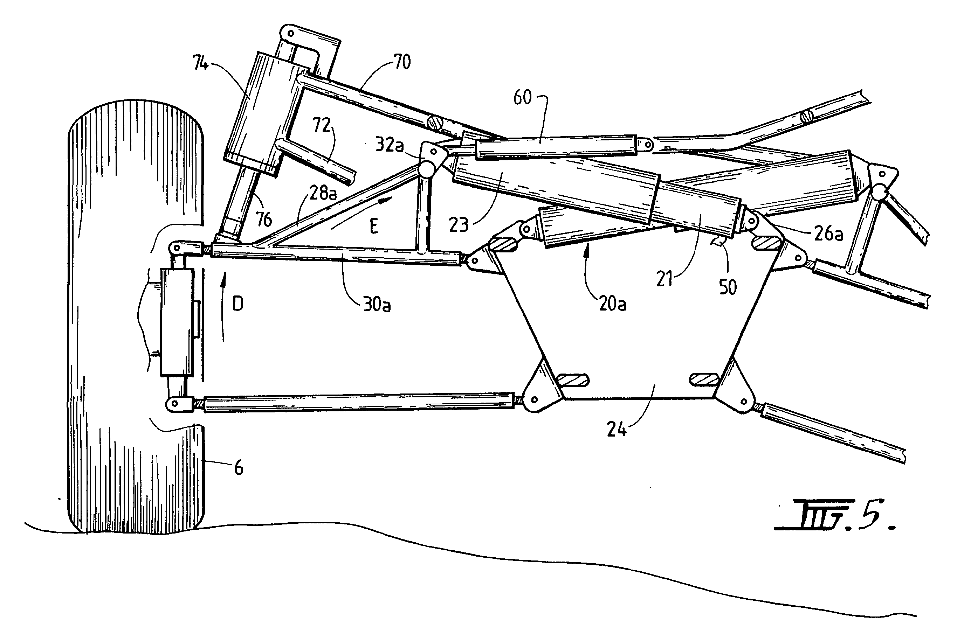

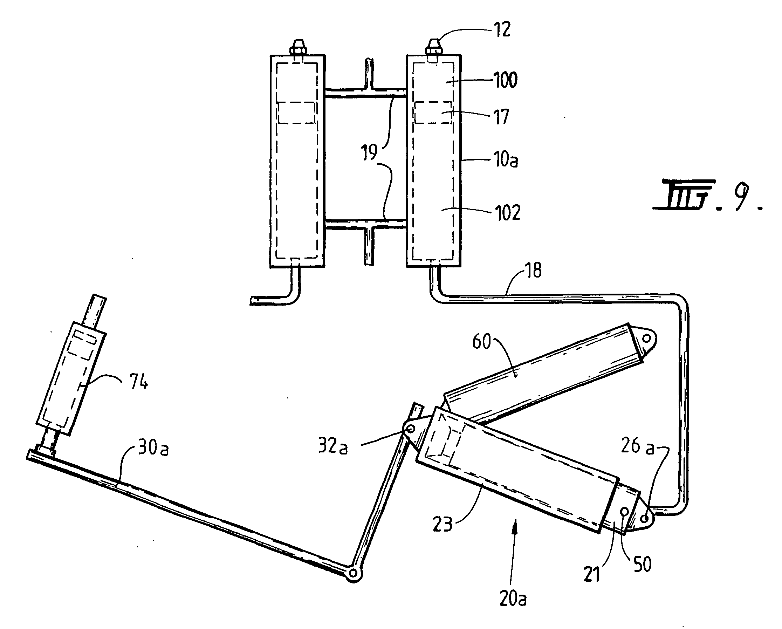

with particular reference to Figures 5 and 9, when vehicle 2 encounters a bump in the form of a rise, ridge, projection or the like, road wheel 6 is forced vertically upwards so that in one position wheel 6 is on about the same level as chassis member 24 as shown in Figure 5. In this position the end of upper wishbone 30a connected to hub 34 is forced vertically upwards in the direction of arrow D of Figure 5 which in turn raises strut arrangement 28a in the direction of arrow E of Figure 5 which in turn forces the damping unit 20a to retract by forcing outer tube 23 towards inner tube 21 so that the volume of fluid in this unit is reduced as the distal ends of the inner 21 and outer 23 telescopic tubes are forced relatively closer to each other. This has the effect of forcing fluid from damping unit 20a via inlet 50 and conduit 18a to cavity 102 of accumulator 10a to axially move piston 17 towards valve 12 at the top of the accumulator thereby increasing the pressure on the gas contained in cavity 100 of the accumulator. The position of piston 17 is relatively closer to valve 12 as shown in Figure 9 which has the effect of increasing the pressure of the gas in cavity 100. Figure 9 also shows damping unit 20a in a retracted position. As the volume of cavity 100 of accumulator 20a is a relatively small volume the pressure of the gas in this volume is at a maximum so that it forces road wheel 6 to return to the normal at rest position or when road wheel 6 encounters a dip in the road or ground surface piston 17 is forced down due to the gas pressure to transfer fluid into damping unit 20a to extend it, typically to the normal at rest position or to the position shown in Figure 4. By road wheel 6 continually and repeatedly moving vertically upwards and downwards in use of the vehicle in accordance with the terrain the vehicle is being driven over fluid is continually flowing into and out of damping unit 20a as it extends and retracts. The rate of flow between the accumulator 10a and damping unit 20a is regulated by the flooder valve provided in the unit itself or by the valving in external shock absorbers 60 and is transferred by the movement of piston 17 inside accumulator 20a which in turn is controlled by the amount of pressure applied by the compressed gas in cavity 100 at one end of the accumulator. As the fluid is continuously being forced into and out of the accumulator heat is generated and radiated through the inner walls 15 of the accumulator where it is removed by the coolant circulating the outer jacket 14 of the accumulator in order to maintain the operating temperature of the fluid.

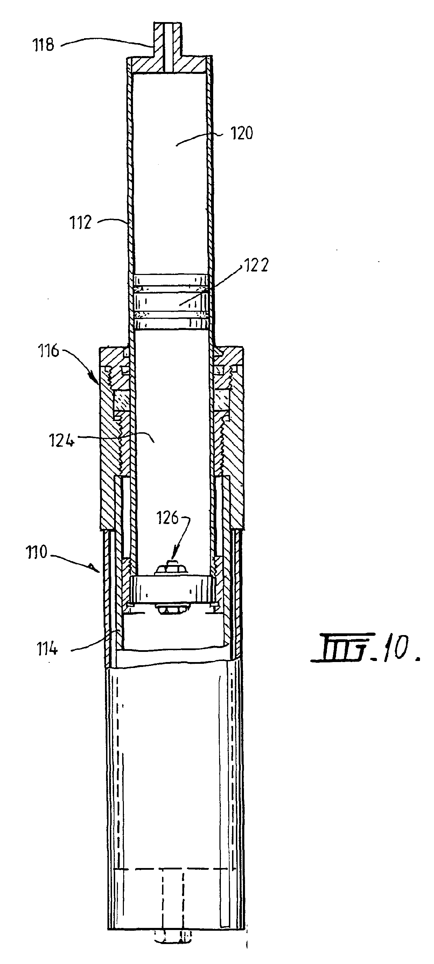

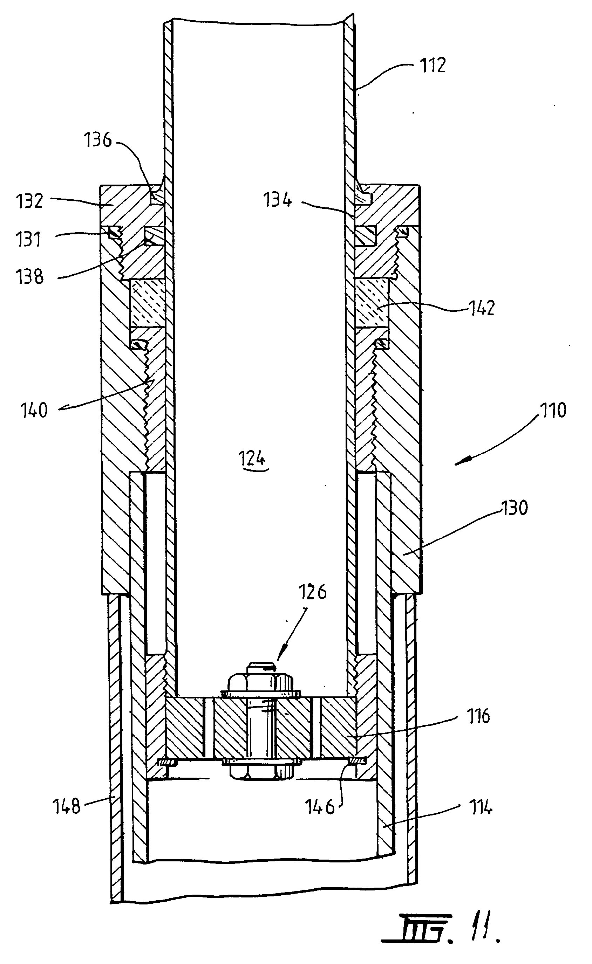

Another embodiment of the suspension system of the present invention will now be described with particular reference to figures 10 and 11. In this embodiment the accumulator and the damping means are contained within a single component in which the accumulator is formed from a first tubular member telescopically located within a second tubular member which is the damping means, the two tubular members being connected together in collinear arrangement and being in fluid communication with each other. The accumulator is sealingly connected to the damping means by an arrangement similar to that shown in figure 6 as will be described with reference to Figure 11.

The further embodiment of the suspension system of the present invention as shown in Figure 10 is in the form of a component 110 which is a combination of the accumulator and damping means in fluid communication with each other similar to the arrangement previously illustrated and described but in a far more compact arrangement allowing greater flexibility for fitting to standard motor vehicles, motorcycles, trucks, cab suspensions, seat suspensions or the like, typically as a replacement for or in addition to the conventional suspension systems of privately owned motor vehicles such as for example McPherson struts, leaf springs, air operated bellows, or the like.

Combined component 110 has a first cylindrical tube 112 which is the accumulator received within a second cylindrical tube 114 which is the damping means. Tube 112 is connected to tube 114 through a connection arrangement 116 which is shown in more detail in figure 11 and will be described in more detail later in this specification. One end of tube 212 which is the outboard end or proximal end is provided with a filling valve 118 for introducing gas, such as nitrogen or similar, under pressure into accumulator tube 112 to fill a first chamber 120 located at or towards the proximal end of tube 112 for storing gas under pressure. A double sided piston 122 is provided intermediate the two ends of accumulator tube 112. The first chamber is formed between filling valve 118 and piston 122. A second chamber 124 is formed between piston 122 and the inboard end or distal end of tube 112. Hydraulic fluid fills the second chamber 124 of accumulator 112. A double acting valve arrangement 126 is provided at or towards the inboard end or distal end of accumulator tube 112 and moves through the hydraulic fluid or the hydraulic fluid moves through it in accordance with corresponding movement of tube 112 depending on whether the valve arrangement is fixed or free to move. Preferably, the valve arrangement is fixed.

The individual valving of valve 126 is such to allow fluid to flow in one direction at one rate when tube 112 moves in a first direction and to flow in the opposite direction at a second rate when tube 112 moves in the opposite direction. The rate of movement of fluid through the valving is dependent upon the number, size and arrangement of the apertures, ports or passageways forming the individual valving within valve 126. It is to be noted that the construction and operation of valve 126 is similar to that of the flooder valve previously described with reference to figure 6. Further, it is to be noted that the construction of the combined unit, particularly with the valve arrangement being fixed allows the suspension system to be used to control and/or maintain the ride height of the vehicle in addition to providing suspension or damping characteristics.

Damping tube 114 extends from connector arrangement 116 which is located at the inboard or distal end of this tube to the other end of the combined component 110 which is the outboard or proximal end of tube 114. Damping tube 114 is filled with hydraulic fluid. As valve 126 separates chamber 124 and the interior of tube 114 both tubes 112 and 114 are in fluid communication with each other through valve 126.

Both ends of combined component 110 are provided with suitable fittings to enable this component to be located in place as part of the suspension system of a motor vehicle. It is to be noted that any suitable fitting can be provided at either or both ends of this form of the component. If necessary or desirable, tubes 112, 114 can be provided with outer cooling jackets for receiving recycled coolant to cool component 110 in use. Additionally or alternatively, the outer surface of damping tube 114 is provided with removable, replaceable and/or interchangeable air cooling fins locatable around the outside of the outer wall of tube 114 for increased cooling if required.

With particular reference to figure 11 in which the construction of connector 116 is shown in more detail, the arrangement of this connector will now be described. The inboard end of accumulator tube 112 is shown received within the inboard end of damping tube 114. A headpiece 130 is fixedly connected to the inboard end of damping tube 114 and extends from the inboard end of damping tube 114 towards accumulator tube 112. Headpiece 130 is screw threadingly engaged to a corresponding screw thread located at the inboard end of damping tube 114. The distal end of headpiece 130 is also provided with an internal threaded portion for receiving a fastening nut 132 therein. Nut 132 is sealed to headpiece 130 by O-ring 131. Fastening nut 132 is provided with a centrally located aperture 134 through which is received the inboard end of accumulator tube 112. A scraper seal 136 and an O-ring 138 are provided inappropriate grooves located in the internal wall of the aperture of fastening nut 132 to seal movement of tube 112 through connector 116. A bush 140 is located internally within headpiece 130 to act as a guide for the movement of accumulator tube 112 and to further seal the component 110 from leaking. A seal 142 is provided between bush 140 and nut 132. The valve arrangement 126 is located at the distal end or inboard end of accumulator tube 112. Valve 126 is held in place within the distal end of tube 112 by circlip 146. An outer jacket 148 is provided around the outside of tube 114 for receiving recycled coolant therethrough to assist in cooling the component during operation.

In operation of this form of the suspension system the outboard end of damping tube 114 is fixedly located to the wheel of a motor vehicle or to another component which is connected either directly or indirectly to one road wheel of the vehicle. Thus, tube 114 moves in accordance with substantially vertical movement of the wheel over bumpy or rough terrain or the like. The outboard end of accumulator tube 112 is connected to the body work of the motor vehicle or other fixed component and is thus fixed in place.

As valve 126 is fixedly connected to the inboard end of tube 112 in one embodiment, valve 126 remains stationary and hydraulic fluid flows through the valve during operation of the suspension system.

In operation when a road wheel encounters a bump in the form of a crest or rise or similar damping tube 114 is forced towards accumulator tube 112 so that the length of the combined component 110 is reduced. In turn, the inboard end of tube 112 is forced further into the body of tube 114 thereby pumping hydraulic fluid from within tube 114 through valve 126 into chamber 124 provided between the inboard surface of piston 122 and valve 126. As the volume of fluid being forced into chamber 124 increases piston 122 travels axially along the inside wall of tube 112 towards the outboard or proximal end of this tube thereby further compressing the gas in chamber 120 and increasing the internal pressure within component 110. This in turn offers increasing resistance to further movement of tube 114 thus limiting the amount of travel of tube 114 which in turn limits the amount of travel of the road wheel in a substantially vertically upwards direction.

When the road wheel returns to its normal position, such as for example, when rebounding or when encountering a trough or crest in the road the length of combined unit 110 is increased by tubes 112 and 114 telescopically expanding with respect to each other thereby allowing fluid to move from chamber 124 into tube 114 which reduced the amount of fluid in chamber 124 allowing piston 122 to move under the increased gas pressure of the compressed gas stored in chamber 120 which in turn reduced the compression or gas pressure of the gas in chamber 120. Further fluid is pumped into tube 114 until all of the pressures equilibrate. The rate at which fluid can flow through valve 126 limits the amount of travel of the road wheel in the substantially vertically downward direction.

In a still further embodiment of the suspension system of the present invention modification to the combined component includes the addition of a removeable/replaceable/interchangeable canister or other container (not shown) associated with accumulator tube 112. In this embodiment an interchangeable container in the form of a canister or similar, such as for example, a container similar to a spin-on/spin-off oil filter is provided at or towards the proximal end of tube 112 at the side of accumulator tube 112 by means of a suitable extension T-piece, take-off or similar outlet located at or towards the outboard end of accumulator 112. The internal volume of the canister provides a reservoir for the gas located in chamber 120 of accumulator tube 112 in order to increase the volume of gas available for operation of this form of the suspension component, and thus the rate of movement of the suspension unit.

A still further modification includes the provision of a secondary canister being in fluid communication with a secondary oil reservoir provided with a movable piston for either independently pumping fluid into the canister at a pre-determined or selected rate or for pumping fluid in accordance with movement of the suspension system during operation of the vehicle.

A still further modification of the present invention includes providing by-pass conduits or similar at paced apart intervals over the length of the combined conduit. The by-pass conduits which are located external to the body of the unit provide a means of fine tuning the compression and rebound characteristics of the unit. Typically, one, two, three or more by-pass tubes are provided in which a two tube arrangement allows for one adjustment on compression and one on rebound while a three tube arrangement allows for two zone adjustment on compression and one on rebound.

It is to be noted that the components of the present invention in addition to being used as suspension

## Claims

1. A suspension system including:
an accumulator (112) for holding and maintaining a fluid under pressure, said accumulator having a floating piston (122) that sealingly separates a first cavity (120) for storing a pressurised gas and a second cavity (124) for storing a fluid under pressure; and
a motion damping means (114) that is fluid-filled in operation, in fluid flow communication with the second cavity (124) of the accumulator (112), said motion damping means (114) having a pair of relatively moveable parts and valve means (126) permitting flow of said fluid between said parts;
wherein said parts are capable of relative retracting and extending movement during which fluid is forced through said valve means (126) at respective predetermined controlled rates so as to dampen the movement;
wherein said movement is such that when said parts relatively extend, fluid is caused to flow from said second cavity of the accumulator (112) to the damping means (114), whereby gas pressure in said first cavity (120) moves the floating piston (122) in the accumulator (112) to reduce the gas pressure in the first cavity (120), and when said parts relatively retract, fluid is caused to flow from the damping means (114) to said second cavity (124) of the accumulator (112), whereby to move the floating piston (122) to increase the gas pressure of the gas in the first cavity (120);
and wherein said relatively moveable parts contain respective chambers for said fluid and comprise a first part (112) and a second part (114) in which the first part is receivable, the chamber of the first part being in said fluid flow communication with said second cavity (124), and in that said valve means (126) separates said chambers but permits said flow of said fluid between the chambers at said respective predetermined controlled rates;
**characterised in that** the suspension system further includes an active suspension component in which a sensor controls movement of a piston (122) in a secondary container (124) containing fluid, said secondary container (124) in fluid communication with a primary container (120) having a piston for containing gas in the primary container (120) under pressure, said primary container (120) in fluid communication with the first cavity (120) of the accumulator of the suspension system, wherein movement of the piston (122) of the secondary container (124) in response to the sensor causes movement of the suspension system to alter the ride height of a vehicle in which the system is installed, and wherein in the event of malfunction of the sensor or the secondary container (124) the piston (122) of the first container (120) moves under gas pressure in the primary container (120) to seal the primary container thereby stopping fluid communication between the primary and secondary containers and thus acting as a fail safe or back-up system by maintaining the ride height of the vehicle.

2. A suspension system according to claim 1 wherein said first (112) and second parts (114) comprise telescopically interengaged tubes respectively of relatively smaller and larger in diameter.

3. A suspension system according to claim 2 wherein said valve means (126) is provided in a valve body fixed at an inner end of the tube comprising said first part (112).

4. A suspension system according to claim 1, 2, or 3, comprising a suspension unit in which said first part (112) and said accumulator (112) are integral whereby said second cavity and said chamber enclosed by the first part comprise a single chamber.

5. A suspension system according to claim 4, wherein said first part (112) and said accumulator (112) are provided by a single tube.

6. A suspension system according to claim 1, 2 or 3, wherein said accumulator (112) and said motion damping means (114) are separate units and a conduit is provided for said fluid flow communication between the chamber of said first part (112) and said second cavity (124).

7. A suspension system according to any preceding claim, in which the suspension is a self-levelling, self-adjusting unit for determining the ride height of a vehicle.

8. A suspension system according to any preceding claim, in which the combined volume of the first and second cavities of the accumulator remains constant, irrespective of the position or movement of said floating piston axially along the accumulator.

9. A suspension system according to any preceding claim, in which the valve means (126) is a flooder valve or similar valve allowing fluid to flow through the valve in two different directions.

10. A suspension system according to claim 9 wherein the valve means (126) is such that the fluid flow rates in the respective directions are different whereby to vary the damping characteristics according to whether said movement is relative retracting or extending movement.

11. A suspension system according to any preceding claim, in which the difference in volume of the motion damping means (114) at predetermined retracted and extended positions of said ports is substantially the same as the change in volume of the second cavity (124) of the accumulator (112) between said positions.

12. A suspension system according to any preceding claim, further including by-pass conduits located externally of the valve means (126) to provide variable valving.

13. A suspension system according to any preceding claim, further including cooling means for reducing the temperature of the system during operation.

14. A suspension system according to claim 13, in which the cooling means includes outer cooling jackets for recycling coolant, or outer cooling fins or similar.

15. A suspension system according to any preceding claim, further including a shock absorbing assembly having at least one shock absorber.

16. A suspension system according to any preceding claim, further including a removable, replaceable, interchangeable canister or other container for varying the gas capacity of the system, or for varying the pressure under which the system operates due to the pressurised gas.

## Patentansprüche

1. Aufhängungssystem, das:
einen Akkumulator (112) zum Aufnehmen und Halten eines Fluids unter Druck, wobei der Akkumulator einen schwimmenden Kolben (122) aufweist, der unter Abdichtung einen ersten Hohlraum (120) zum Speichern eines unter Druck stehenden Gases und einen zweiten Hohlraum (124) zum Speichern eines Fluids unter Druck trennt; und
eine Bewegungs-Dämpfungseinrichtung (114) einschließt, die im Betrieb Fluid-gefüllt ist und in Fluid-Strömungsverbindung mit dem zweiten Hohlraum (124) des Akkumulators (112) steht, wobei die Bewegungs-Dämpfungseinrichtung (114) ein Paar von relativ zueinander beweglichen Teilen und Ventileinrichtungen (126) aufweist, die eine Strömung des Fluids zwischen den Teilen ermöglichen;
wobei die Teile eine Einfahr- und Ausfahr-Relativbewegung ausführen können, während der Fluid durch die Ventileinrichtung (126) mit jeweiligen vorgegebenen gesteuerten Raten gedrückt wird, um die Bewegung zu dämpfen;
wobei die Bewegung derart ist, wenn die Teile relativ zueinander ausgefahren werden, die Strömung des Fluids von dem zweiten Hohlraum des Akkumulators (112) zu der Dämpfungseinrichtung (114) hervorgerufen wird, wodurch ein Gasdruck in dem ersten Hohlraum (120) den schwimmenden Kolben (122) in dem Akkumulator (112) bewegt, um den Gasdruck in dem ersten Hohlraum (120) zu verringern, während, wenn die Teile relativ zueinander eingefahren werden, die Strömung des Fluids von der Dämpfungseinrichtung (114) zu dem zweiten Hohlraum (124) des Akkumulators (112) hervorgerufen wird, wodurch der schwimmende Kolben (122) zur Vergrößerung des Gasdruckes des Gases in dem ersten Hohlraum (120) bewegt wird;
und wobei die relativ zueinander beweglichen Teile jeweilige Kammern für das Fluid enthalten und einen ersten Teil (112) und einen zweiten Teil (114) umfassen, in dem der erste Teil aufnehmbar ist, wobei die Kammer des ersten Teils in der Fluid-Strömungsverbindung mit dem zweiten Hohlraum (124) steht und wobei die Ventileinrichtung (126) die Kammern trennt, jedoch die Strömung des Fluids zwischen den Kammern mit den jeweiligen vorgegebenen gesteuerten Raten ermöglicht;
**dadurch gekennzeichnet, dass** das Aufhängungssystem weiterhin eine aktive Aufhängungs-Komponente einschließt, in der ein Sensor die Bewegung eines Kolbens (122) in einem sekundären, Fluid enthaltenden Behälter (124) steuert, wobei der sekundäre Behälter (124) in Fluid-Verbindung mit dem primären Behälter (120) steht und einen Kolben zum Halten eines Gases in dem primären Behälter (120) unter Druck aufweist, wobei der primäre Behälter (120) in Fluid-Verbindung mit dem ersten Hohlraum (120) des Akkumulators des Aufhängungssystems steht, wobei eine Bewegung des Kolbens (122) des sekundären Behälters (124) in Abhängigkeit von dem Sensor eine Bewegung des Aufhängungssysstem zur Änderung der Fahrhöhe eines Fahrzeuges hervorruft, in dem das System installiert ist, und wobei im Fall einer Fehlfunktion des Sensors oder des sekundären Behälters (124) der Kolben (122) des ersten Behälters (120) sich unter Gasdruck in dem primären Behälter (120) bewegt, um den primären Behälter abzudichten, wodurch eine Fluid-Verbindung zwischen den primären und sekundären Behältern gestoppt wird und dies als ein Ausfallsicherheits- oder Reservesystem durch Aufrechterhalten der Fahrhöhe des Fahrzeuges wirkt.

2. Aufhängungssystem nach Anspruch 1, bei dem die ersten (112) und zweiten (114) Teile teleskopartig miteinander im Eingriff stehende Rohre jeweils mit einem relativ kleineren und größeren Durchmesser umfassen.

3. Aufhängungungssystem nach Anspruch 2, bei dem die Ventileinrichung (126) in einem Ventilkörper vorgesehen ist, der an einem inneren Ende des Rohres befestigt ist, das den ersten Teil (112) bildet.

4. Aufhängungssystem nach Anspruch 1, 2 oder 3, mit einer Aufhängungseinheit, in der der erste Teil (112) und der Akkumulator (112) einstückig sind, wodurch der zweite Hohlraum und die von dem ersten Teil eingeschlossene Kammer eine einzige Kammer umfassen.

5. Aufhängungssystem nach Anspruch 4, bei dem der erste Teil (112) und der Akkumulator (112) durch ein einziges Rohr gebildet sind.

6. Aufhängungssystem nach Anspruch 1, 2 oder 3, bei dem der Akkumulator (112) und die Bewegungs-Dämpfungseinrichtung (114) getrennte Einheiten sind und eine Leitung für die Fluid-Strömungsverbindung zwischen der Kammer des ersten Teils (112) und dem zweiten Hohlraum (124) vorgesehen ist.

7. Aufhängungssystem nach einem der vorhergehenden Ansprüche, bei dem die Aufhängung eine selbstnivellierende, selbsteinstellende Einheit zur Festlegung Fahrhöhe eines Fahrzeuges ist.

8. Aufhängungssystem nach einem der vorhergehenden Ansprüche, bei dem das kombinierte Volumen der ersten und zweiten Hohlräume des Akkumulators konstant bleibt, unabhängig von der Position oder Bewegung des schwimmenden Kolbens in Axialrichtung entlang des Akkumulators.

9. Aufhängungssystem nach einem der vorhergehenden Ansprüche, bei dem die Ventileinrichtung (126) ein Fluter-Ventil oder ein ähnliches Ventil ist, das eine Strömung des Fluids durch das Ventil in zwei unterschiedlichen Richtungen zulässt.

10. Aufhängungssystem nach Anspruch 9, bei dem die Ventileinrichtung (126) derart ist, dass die Fluid-Strömungsraten in den jeweiligen Richtungen unterschiedlich sind, wodurch die Dämpfungs-Charakteristik in Abhängigkeit davon geändert werden, ob die Bewegung einer relative Einfahr- oder Ausfahr-Bewegung ist.

11. Aufhängungssystem nach einem der vorhergehenden Ansprüche, bei dem die Differenz des Volumens der Bewegungs-Dämpfungseinrichtung (114) bei vorgegebenen eingefahrenen und ausgefahrenen Positionen der Teile im Wesentlichen gleich der Änderung des Volumens des zweiten Hohlraums (124) des Akkumulators (112) zwischen den Positionen ist.

12. Aufhängungssystem nach einem der vorhergehenden Ansprüche, das weiterhin Nebenschluss-Leitungen einschließt, die sich außerhalb der Ventileinrichtungen (126) befinden, um eine veränderbare Ventilwirkung zu schaffen.

13. Aufhängungssystem nach einem der vorhergehenden Ansprüche, das weiterhin Kühleinrichtungen zur Verringerung der Temperatur des Systems im Betrieb einschließt.

14. Aufhängungssystem nach Anspruch 13, bei dem die Kühleinrichtung äußere Kühlmäntel zum Umlauf von Kühlmittel, oder äußere Kühlrippen oder ähnliches einschließt.

15. Aufhängungssystem nach einem der vorhergehenden Ansprüche, das weiterhin eine Stoßdämpfer-Baugruppe mit zumindest einem Stoßdämpfer einschließt.

16. Aufhängungssystem nach einem der vorhergehenden Ansprüche, das weiterhin einen entfernbaren, ersetzbaren Kanister oder anderen Behälter zur Änderung der Gaskapazität des Systems oder zur Änderung des Druckes einschließt, unter dem das System aufgrund des unter Druck stehenden Gases arbeitet.

## Revendications

1. Système de suspension comprenant :
un accumulateur (112) destiné à contenir et à maintenir un fluide sous pression, ledit accumulateur ayant un piston flottant (122) qui sépare de manière étanche une première cavité (120) destinée à emmagasiner un gaz sous pression et une deuxième cavité (124) destinée à emmagasiner un fluide sous pression ; et
un moyen d'amortissement de mouvement (114) qui est rempli de fluide pendant le fonctionnement et en communication fluide avec la deuxième cavité (124) de l'accumulateur (112), ledit moyen d'amortissement de mouvement (114) ayant une paire de parties mobiles l'une par rapport à l'autre et un moyen formant soupape (126) permettant un écoulement dudit fluide entre lesdites parties ;
dans lequel lesdites parties sont aptes à effectuer un mouvement relatif de rétraction et d'extension durant lequel un fluide est poussé à travers ledit moyen formant soupape (126) à des vitesses commandées prédéterminées respectives afin d'amortir le mouvement ;
dans lequel ledit mouvement est tel que quand lesdites parties s'étendent l'une par rapport à l'autre, le fluide est contraint de s'écouler de ladite deuxième cavité de l'accumulateur (112) vers le moyen d'amortissement (114), ainsi la pression du gaz dans ladite première cavité (120) déplace le piston flottant (122) dans l'accumulateur (112) afin de réduire la pression du gaz dans la première cavité (120), et que quand lesdites parties se rétractent l'une par rapport à l'autre, le fluide est contraint de s'écouler du moyen d'amortissement (114) vers ladite deuxième cavité (124) de l'accumulateur (112), ce qui déplace le piston flottant (122) afin d'augmenter la pression du gaz dans la première cavité (120) ;
et dans lequel lesdites parties mobiles l'une par rapport à l'autre contiennent des chambres respectives pour ledit fluide et comprennent une première partie (112) et une deuxième partie (114) dans laquelle la première partie peut être reçue, la chambre de la première partie étant en communication fluide avec la deuxième cavité (124), et ledit moyen formant soupape (126) sépare lesdites chambres, mais permet ledit écoulement dudit fluide entre les chambres auxdites vitesses commandées prédéterminées respectives ;
**caractérisé en ce que** le système de suspension comprend en outre un élément de suspension active dans lequel un détecteur contrôle le mouvement d'un piston (122) dans un réservoir secondaire (124) contenant du fluide, ledit réservoir secondaire (124) en communication fluide avec un réservoir principal (120) comportant un piston pour maintenir sous pression un gaz dans le réservoir principal (120), ledit réservoir principal (120) en communication fluide avec la première cavité (120) de l'accumulateur du système de suspension, dans lequel le mouvement du piston (122) du réservoir secondaire (124) en réponse au détecteur provoque un mouvement du système de suspension afin de modifier le niveau d'un véhicule dans
lequel le système est installé, et dans lequel en cas de dysfonctionnement du détecteur ou du réservoir secondaire (124), le piston (122) du réservoir principal (120) se déplace sous l'effet de la pression du gaz dans le réservoir principal (120) pour rendre étanche le réservoir principal, ce qui arrête l'échange de fluide entre le réservoir principal et le réservoir secondaire et joue donc le rôle d'un système à sécurité intrinsèque ou de secours en maintenant le niveau du véhicule.

2. Système de suspension selon la revendication 1, dans lequel lesdites première (112) et deuxième (114) parties comprennent des tubes coopérant de manière télescopique ayant respectivement l'un par rapport à l'autre un diamètre plus petit et un diamètre plus grand.

3. Système de suspension selon la revendication 2, dans lequel ledit moyen formant soupape (126) est placé dans un corps de soupape fixé à une extrémité intérieure du tube comprenant ladite première partie (112).

4. Système de suspension selon la revendication 1, 2 ou 3, comprenant une unité de suspension dans laquelle ladite première partie (112) et ledit accumulateur (112) sont formés d'une seule pièce, ainsi ladite deuxième cavité et ladite chambre entourée par la première partie comprennent une seule chambre.

5. Système de suspension selon la revendication 4, dans lequel ladite première partie (112) et ledit accumulateur (112) sont fournis par un seul tube.

6. Système de suspension selon la revendication 1, 2 ou 3, dans lequel ledit accumulateur (112) et ledit moyen d'amortissement de mouvement (114) sont des unités séparées et un conduit est prévu pour ledit échange de fluide entre la chambre de ladite première partie (112) et ladite deuxième cavité (124).

7. Système de suspension selon l'une quelconque des revendications précédentes, dans lequel la suspension est une unité d'autonivelage, autoréglable destinée à déterminer le niveau d'un véhicule.

8. Système de suspension selon l'une quelconque des revendications précédentes, dans lequel le volume combiné des première et deuxième cavités de l'accumulateur reste constant, quelle que soit la position ou le mouvement dudit piston flottant dans le sens axial le long de l'accumulateur.

9. Système de suspension selon l'une quelconque des revendications précédentes, dans lequel le moyen formant soupape (126) est une soupape de remplissage ou une soupape similaire permettant un échange de fluide à travers la soupape dans deux directions différentes.

10. Système de suspension selon la revendication 9, dans lequel le moyen formant soupape (126) est tel que les débits de fluide dans les directions respectives sont différents, ce qui fait varier les caractéristiques d'amortissement selon que le mouvement est un mouvement relatif de rétraction ou d'extension.

11. Système de suspension selon l'une quelconque des revendications précédentes, dans lequel la différence de volume du moyen d'amortissement de mouvement (114) dans des positions rétractée ou étendue prédéterminées desdites parties est sensiblement la même que la variation de volume de la deuxième cavité (124) de l'accumulateur (112) entre lesdites positions.

12. Système de suspension selon l'une quelconque des revendications précédentes, comprenant en outre des conduits de dérivation situés à l'extérieur du moyen formant soupape (126) pour offrir une disposition variable des soupapes.

13. Système de suspension selon l'une quelconque des revendications précédentes, comprenant en outre un moyen de refroidissement pour réduire la température du système durant le fonctionnement.

14. Système de suspension selon la revendication 13, dans lequel le moyen de refroidissement comprend des chemises extérieures de refroidissement pour recycler un liquide de refroidissement, ou des ailettes extérieures de refroidissement ou analogue.

15. Système de suspension selon l'une quelconque des revendications précédentes, comprenant en outre un ensemble amortisseur de choc comprenant au moins un amortisseur de chocs.

16. Système de suspension selon l'une quelconque des revendications précédentes, comprenant en outre un boîtier échangeable, remplaçable, amovible ou un autre conteneur pour faire varier la capacité de gaz du système ou pour faire varier la pression à laquelle le système fonctionne en raison du gaz sous pression.
